# EUROPEAN PATENT SPECIFICATION

(11) **EP 2 908 589 B1**
(45) Date of publication and mention of the grant of the patent: **05.09.2018**
(21) Application number: 14155253.9
(22) Date of filing: 14.02.2014
(51) Int. Cl.: H04W 72/12, H04W 52/02, H04L 5/00

(54) **METHOD AND APPARATUSES FOR MANAGING INTERFERENCES BETWEEN CELLS AND POWER CONSUMPTIONS OF RADIO ACCESS NODES OPERATING THE CELLS**
VERFAHREN UND VORRICHTUNGEN ZUR VERWALTUNG DER INTERFERENZEN ZWISCHEN ZELLEN UND DES LEISTUNGSVERBRAUCHS VON FUNKZUGANGSKNOTEN FÜR DEN BETRIEB DER ZELLEN
PROCÉDÉ ET APPAREILS DE GESTION D'INTERFÉRENCES ENTRE DES CELLULES ET DE CONSOMMATION D'ÉNERGIE DES NOEUDS D'ACCÈS RADIO PERMETTANT DE FAIRE FONCTIONNER LES CELLULES

(43) Date of publication of application: 19.08.2015
(73) Proprietor: Alcatel Lucent, 91620 Nozay (FR)
(72) Inventor: Conte, Alberto, 91620 Nozay (FR); Feki, Afef, 91620 Nozay (FR)
(74) Representative: Berthier, Karine

(56) References cited:
- WO-A1-2011/163201
- WO-A1-2012/105391
- US-A1- 2010 008 230
- US-A1- 2013 003 646

## Description

### FIELD OF THE INVENTION

The present invention relates to a method for managing interference between cells and power consumptions of radio access nodes operating the cells.

### BACKGROUND AND RELATED ART

With the exposure of the traffic demand and services on mobile devices, it becomes more and more necessary to deploy additional radio access nodes and use more efficient radio access technologies.

Those additional radio access nodes and radio access technologies installed consume a lot of energy.

Furthermore, those additional radio access nodes and radio access technologies installed generates a high risk of interferences between cells, see for example the document US 2013/0003646 "Method and device for data processing in a wireless network". In order to decrease the interferences, the LTE technologies encourage data offloading. By adding a positive bias in cell selection process, more users can select picocells as their serving cells even the picocell is not of the strongest signal. Also, to protect offloaded users from severe macrocell interference, a specific technique called almost blank sub-frame (ABS) is introduced. This technique allows creating specific subframes (almost blank sub-frames) within a frame during which a cell does not transmit any data. Since macrocell remain silent during ABSs, the offloaded users can be allocated without strong macrocell interference within ABSs. It is noted that the offloaded user's average data rate highly depends on the amount of ABS pattern density (i.e. the number and place of almost blank subframes in a specific frame) because the scheduling opportunities of offloaded users are limited within ABSs. Therefore, the data rate is not optimum and interferences occur frequently yet.

### THE INVENTION

The object of the invention is therefore to overcome these drawbacks. More particularly, the method according to the invention allows simultaneity reducing the power consumption of base stations and managing the interferences between cells.

To this end, the invention relates to a method according to claim 1. The method according to the invention allows:
- creating a longer silent period (unload period) during which a radio access node adopts an efficient energy saving mode. This unload period permit to reduce the energy consumption of the radio access node, and
- controlling interferences of adjacent cells, so as to allowing a correct transmission to a user terminal located in the given cell.

In addition to the main features aforementioned in the previous paragraph, the method for managing interference between cells and power consumptions of radio access nodes operating the cells according to the invention may also have one or more of the additional features below, taken individually or in any technically feasible combination.

In a not limited embodiment, the determining and the positioning are performed in a central manner by a network unit.

In a not limited embodiment, the method further comprises, at the network unit,
- receiving from the given radio access node cell data load information indicative of a current data load of the given cell,
- determining the given cell data load based on the current cell data load,
- sending to the given radio access node first positioning information indicative of the pattern of active sub-frames to be used within the given cell.

In an example the method further comprising, at the network unit, sending to the given radio access node set of pre-defined patterns of active sub-frames according to respective pre-determined levels of the cell data load, the given radio access node selecting an appropriate pattern according to a current data load of the given cell.

In a not limited embodiment, the positioning is performed in a distributed manner by the radio access nodes operating the cells.

In a not limited embodiment, the method further comprising, at the given radio access node receiving, from neighboring radio access nodes operating the neighboring cells, second positioning information indicative of patterns of active sub-frames currently used in the neighboring cells.

In a not limited embodiment, precedence is given to time sub-frames that are not primarily used in neighboring cells by measuring the quality of user data radio communication in the given cell, and, if the quality is below a pre-determined threshold, then the position of the reduced number of time sub-frames is modified in order to converge to a position generating a quality of user data radio transmission tending to or above the pre-determined threshold.

In a not limited embodiment, the method further comprising adopting a low energy mode during the unload period of the time frame.

In a not limited embodiment, during the unload period no data are sent.

The invention relates also to a radio resource controller according to claim 9. The invention relates also to a radio access node comprising a radio resource controller according to the invention.

The invention relates also to a radio network controller comprising a radio resource controller according to the invention, said radio network controller being further configured,
- to receive from the given radio access node cell data load information indicative of a current data load of the given cell,
- to determine the given cell data load based on the current cell data load,
- to send to the given radio access node first positioning information indicative of the pattern of active sub-frames to be used within the given cell.

The invention relates also to a network manager comprising a radio resource controller according to the invention, the network manager being further configured,
- to receive from the given radio access node cell data load information indicative of a current data load of the given cell,
- to determine the given cell data load based on the current cell data load,
- to send to the given radio access node first positioning information indicative of the pattern of active sub-frames to be used within the given cell.

### BRIEF DESCRIPTION OF THE DRAWINGS

Further features and advantages of the invention will become clear upon reading the following description given by way of non-limiting indication and with reference to the accompanying drawings, in which:
- Figure 1 is a synoptic scheme of a first example of the method for managing interference between cells and power consumptions of radio access nodes operating the cells according to the invention,
- Figure 2 is a scheme of three cells and time frames managed by a method according to the invention,
- Figure 3 illustrates different load periods of a time frame performed by the method according to the invention,
- Figure 4 illustrates a synoptic scheme of a second example of the method for managing interference between cells and power consumptions of radio access nodes operating the cells_according to the invention,
- Figure 5 illustrates a synoptic scheme of a third example of the method for managing interference between cells and power consumptions of radio access nodes operating the cells_according to the invention,
- Figure 6 illustrates a synoptic scheme of a fourth example of the method for managing interference between cells and power consumptions of radio access nodes operating the cells_according to the invention,
- Figure 7 illustrates a synoptic scheme of a fifth example of the method for managing interference between cells and power consumptions of radio access nodes operating the cells_according to the invention,
- Figure 8 illustrates a radio resource controller according to the invention,
- Figure 9 illustrates a base station according to the invention,
- Figure 10 illustrates a radio network controller according to the invention,
- Figure 11 illustrates a network manager according to the invention.

For reasons of clarity, only those elements beneficial for comprehension of the invention have been shown, more specifically schematically and with no regard for scale. Furthermore, like elements illustrated in different figures are denoted by like reference numerals.

In the rest of the description "embodiment", merely represents an implementation example.

### DETAILLED DESCRIPTION

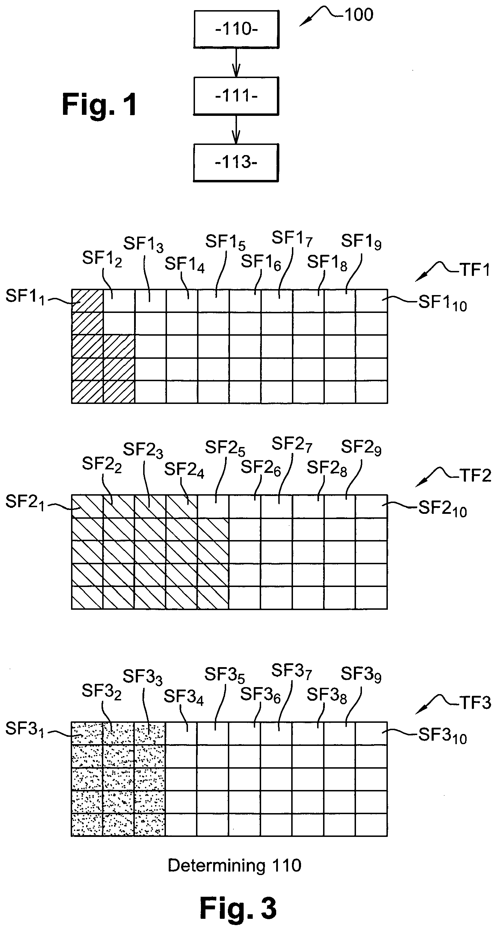

The method 100 for managing interference between cells and power consumptions of radio access nodes operating the cells according to the invention is detailed below with figures 1 to 7.

It could be noted that according to the method 100, radio communication within the cells uses radio resource blocks that are frequency and time multiplexed over the air.

For instance, the method 100 can apply to the Long Term Evolution LTE technology, to the LTE-Advanced technology, or to the 5G technology. In a general manner, the method 100 can apply to a technology allowing using a temporal differentiation during the data emission.

Furthermore, the method 100 can be implemented into a radio access node, more particularly a scheduler. In another embodiment, the method 100 can be implemented above the scheduler, by instance into an equipment of an operator. For example, in the LTE/LTE-A technology, the method 100 can be implemented into an eNB, a mobility management entity MME, a network management system, or a centralized entity possibly executing in the cloud.

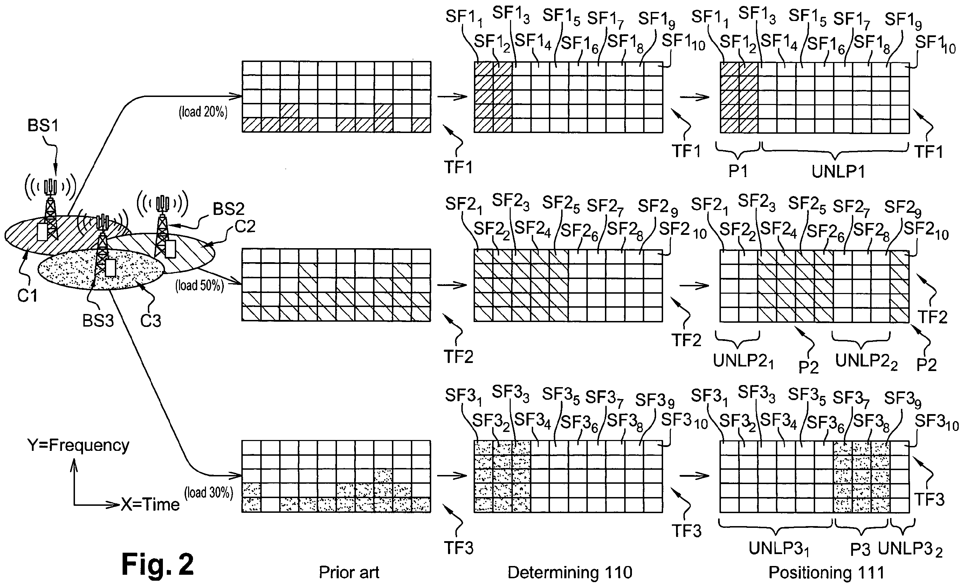

The figure 2 illustrates three cells C1, C2, C3. Each cell C1, C2, C3 is operated by a radio access node, wherein each radio access node is formed in this not limited example by a base station BS1, BS2, BS3.

For a given cell (for instance, cell C1) operated by a given radio access node (BS1 in the example), the method 100 comprises a step 110 of determining a reduced number of time sub-frames within a given time frame that is adapted to sustain a given data load of the given cell C1 by selecting radio resource blocks of the given cell frequency-wise first and time-wise next. The estimation of the data load of the given cell C1 can be achieved for instance by looking at the status of the different data queues in the cell C1.

In order to illustrate the method 100, a not limited example is chosen, wherein the data load of:
- the cell C1 is equal to 20%,
- the cell C2 is equal to 50%, and
- the Cell C3 is equal to 30%.

Furthermore, the figure 2 illustrates three time frame TF1, TF2, TF3 filled according to the prior art. Usually the data load of a given cell is not filled in a time frame by frequency-wise first and time-wise next. Indeed, in the prior art none priority is given to fill a time frame by filling all resource blocks of a first time sub-frame, before filling another time-sub-frame. Therefore, no unload period is present.

While, according to the invention, the determining 110 consist in determining a reduced number of time sub-frames within a given time frame that is adapted to sustain a given data load of the given cell by selecting radio resource blocks of the given cell frequency-wise first and time-wise next. This is performed by regrouping all the data transmissions into the minimum number of time sub-frames, leaving the remaining ones "empty", as depicted in Figure 2. Note that "empty" time sub-frames do not transport data. However, during the empty time sub-frames it is possible to:
- transmit signaling and controlling information in a regular way, i.e like in case of a time sub-frame non empty
- transmit signaling and controlling information in a limiting way, i.e. less than in case of a time sub-frame non empty, or
- transmit no signaling and controlling information.

More particularly, the figure 2 illustrates three time frames TF1, TF2, TF3 represented by time on x-axis and frequency on y-axis. In the illustrated example, each time frame TF1, TF2, TF3 is a frame according to the LTE technology, i.e. a time frame of 10 ms comprises 10 time sub-frames of 1 ms. Therefore, one time sub-frame can, for instance, sustain up to approximately 10% load.

The reduced number of time sub-frames is determined by allocating the data among a sub-frame such as to fill said sub-frame entirely before allocating data among another sub-frame. In other words, ones select radio resource blocks of the given cell frequency-wise first and time-wise next.

In the example,
- the 20 % of data load of cell C1 permits to fill all resource blocks of two time sub-frames SF1₁ and SF1₂ of the time frame TF1,
- the 50 % of data load of cell C2 permits to fill all resource blocks of five time sub-frames SF2₁, SF2₂, SF2₃, SF2₄ and SF2₅ of the time frame TF2,
- the 30 % of data load of cell C3 permits to fill all resource blocks of three time sub-frames SF3₁, SF3₂ and SF3₃ of the time frame TF3.

It could be noted that the frequency resources used by the three cells C1, C2 and C3 are the same. In others words, the frequency resources are shared by the three cells, i.e. the three cells C1, C2 and C3 works on the same frequency spectrum.

Besides, the filling of time sub-frames depends of the cell data load. Therefore, if the data load of the cell C1 is equal to 16%, the data load of the cell C2 is equal to 48%, and the data load of the cell C3 is equal to 30%, then one time sub-frame (SF1₂ in the example illustrated in figure 3) of the time frame TF1 and one time sub-frame (SF2₅ in the example illustrated in figure 3) of the time frame TF2 will not completely filled but will maximum filled.

The method 100 comprises, for a given cell C1, a further step of positioning 111 the reduced number of time sub-frames within the time frame TF1 to form a pattern P1 of active sub-frames SF1, SF2 to be primarily used for data communication within the given cell C1 during the time frame TF1 while creating an unload period UNLP1 within the time frame TF1, the positioning giving precedence to time sub-frames SF1, SF2 that are not primarily used in neighboring cells C2, C3. In other words, the position of reduced number of time sub-frames is chosen such as to minimize and possibly avoid interferences with neighbouring cells C2, C3. For example, according to the example illustrated in figure 2, the position of patterns P1, P2, P3 and of unload periods UNLP1, UNLP2₁, UNLP2₂ and UNLP3₁, UNLP3₂. It could be noted that for:
- the time frame TF1 of the cell C1, the position selected for the pattern P1 is formed by the first time two sub-frames SF1₁, SF1₂, and the unload period UNLP1 is formed by the followings eight time sub-frames SF1₃, SF1₄, SF1₅, SF1₆, SF1₇, SF1₈, SF1₉, and SF1₁₀,
- the time frame TF2 of the cell C2, the position selected for the pattern P2 is formed by the time sub-frames SF2₃, SF2₄, SF2₅, SF2₆, SF2₁₀, and the unload periods UNLP2₁ and UNLP2₂ are formed by the time sub-frames SF2₁, SF2₂, and by the time sub-framesSF2₇, SF2₈, SF2₉,
- the time frame TF3 of the cell C3, the position selected for the pattern P3 is formed by the time sub-frames SF3₇, SF3₈, SF3₉, and the unload periods UNLP3₁ and UNLP3₂ are formed by the time sub-frames SF3₁, SF3₂, SF3₃, SF3₄, SF3₅, SF3₆ and by the time sub-frame SF1₁₀.

Therefore, it could be noted that none of the time sub-frames filled overlap in time. This particularity permits to minimize, and in this example avoid, interferences between cells C1, C2 and C3.

Indeed, when the base station BS1 will transmit the data on the pattern P1 formed by the time sub-frames SF1₁ and SF1₂, the base stations BS2 and BS3 will remain silent. Then, when the base station BS2 will transmit the data on the pattern P2 formed by the time sub-frames SF2₃, SF2₄, SF2₅, SF2₆, and SF2₁₀, the base stations BS1 and BS3 will remain silent. Lastly, when the base station BS3 will transmit the data on the pattern P3 formed by the time sub-frames SF3₇, SF3₈, and SF3₉, the base stations BS1 and BS2 will remain silent.

Furthermore, during the unload period UNLP1 or silent period the base station BS1 will not transmit any data (it could be noted that the control informations such as mandatory signaling and control signals can be still transmitted). More generally, during the empty time sub-frames it is possible to :
- transmit signaling and controlling information in a regular way, i.e like in case of a time sub-frame non empty
- transmit signaling and controlling information in a limiting way, i.e. less than in case of a time sub-frame non empty, or
- transmit no signaling and controlling information.

Furthermore, during the unload periods UNLP2₁ and UNLP2₂ the base station BS2 will not transmit any data and during the unload periods UNLP3₁ and UNLP3₂ the base station BS3 will not transmit any data.

Furhermore, according to the invention the positioning 111 gives precedence to time sub-frames that are not primarily used in neighboring cells. "Primarily" means we try to have disjoint transmission periods for the neighboring cells as far as we can, that is to say if the current cell load pattern permits it, else we have to use a few common transmission radio resource blocks (or slots) wherein the level of interference will be more pronounced for the communication sessions using these common transmission slots.

Indeed, it may not always be possible to use disjoint transmission periods for neighboring cells. For instance, if the load of the cell C1 is equal to 20%, the load of the cell C2 is equal to 50% and the load of the cell C3 is 40%, then the respective active transmission periods may overlap.

It could be noted that the determining 110 and the positioning 111 could be realized according to several embodiments.

In a first not limited embodiment, the determining 110 and the positioning 111 are performed in a central manner by a network unit. The network unit can be, for instance, a base station, a mobility management entity, a network management system, an inter-cell coordinator, a femto-gateway (also known as HeNB-gateway in LTE), or a centralized entity possibly executing in a cloud.

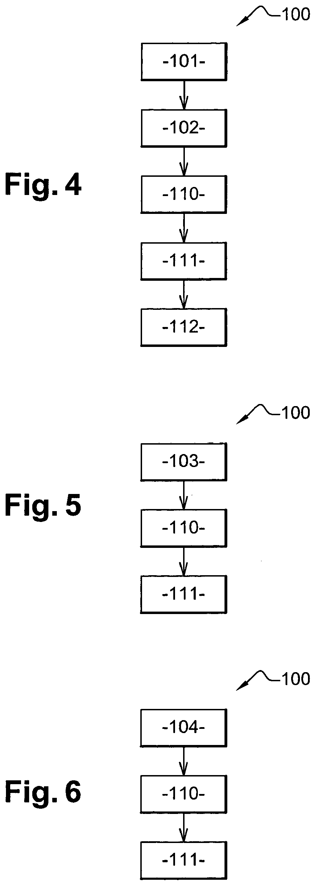

In a first not limited embodiment of the determining 110 and the positioning 111 according to a central manner embodiment illustrated in figure 4, the method 100 comprises, at the network unit,
- receiving 101 from a given radio access node BS1 cell data load information indicative of a current data load of the given cell C1 ,
- determining 102 the given cell C1 data load based on the current cell data load,
- determining 110 a reduced number of time sub-frames within a given time frame TF1 that is adapted to sustain the given data load of the given cell C1 by selecting radio resource blocks of the given cell frequency-wise first and time-wise next,
- positioning 111 the reduced number of time sub-frames within the time frame TF1 to form a pattern P1 of active sub-frames SF1, SF2 to be primarily used for data communication within the given cell C1 during the time frame TF1 while creating an unload period UNLP1 within the time frame TF1, the positioning 111 giving precedence to time sub-frames SF1, SF2 that are not primarily used in neighboring cells C2, C3, and
- sending 112 to the given radio access node BS1 first positioning information indicative of the pattern P1 of active sub-frames to be used within the given cell C1.

It could be noted that the steps of receiving 101, determining 102, determining 110, positioning 111 and sending 112 can be realized for all radio access nodes operated by the central unit. The central unit might be the base station BS2 in the example.

In a second not limited embodiment of the determining 110 and the positioning 111 according to a central manner embodiment illustrated in figure 5, the method 100 comprises, at the network unit,
- sending 103 to a given radio access node BS1 set of pre-defined patterns of active sub-frames according to respective pre-determined levels of the cell data load C1,
- determining 110 a reduced number of time sub-frames within a given time frame TF1 that is adapted to sustain a given data load of the given cell C1 by selecting radio resource blocks of the given cell frequency-wise first and time-wise next,
- positioning 111 the reduced number of time sub-frames within the time frame TF1 to form a pattern P1 according to a pre-defined pattern of active sub-frames SF1, SF2 to be primarily used for data communication within the given cell C1 during the time frame TF1 while creating an unload period UNLP1 within the time frame TF1. Therefore, in this not limited embodiment, the given radio access node BS1 selects an appropriate pattern from the set of pre-defined patterns.

In other words, for performing this embodiment, the method 100 comprises a step of sending 103 a set of pre-defined patterns for all radio access nodes BS1, BS2, BS3, each pre-defined pattern being formed by a determined number of sub-frames. Each pattern indicates which sub-frames to use given the needed number of sub-frames to sustain a determined data load. Therefore, in step 111, each radio access node BS1, BS2 or BS3 can use these pre-defined patterns to autonomously and individually select the position.

These pre-defined patterns can be sent, for instance, when the radio access node starts-up. These pre-defined patterns can also be modified and updated for example when a new radio access node is deployed in the region.

In another not limited embodiment, the determining 101 and the positioning 102 are performed in a distributed manner by a radio access nodes BS1 operating the cells C1.

In a first not limited embodiment illustrated in figure 6 of the determining 110 and the positioning 111 according to a distributed manner embodiment, the method 100 comprises, at the given radio access node BS1,
- receiving 104, from neighboring radio access nodes BS2, BS3 operating the neighboring cells C2, C3, second positioning information indicative of patterns P2, P3 of active sub-frames currently used in the neighboring cells C2, C3,
- determining 110 a reduced number of time sub-frames within a given time frame TF1 that is adapted to sustain a given data load of the given cell C1 by selecting radio resource blocks of the given cell frequency-wise first and time-wise next,
- positioning 111 the reduced number of time sub-frames within the time frame TF1 to form a pattern P1 according to a pre-defined pattern of active sub-frames SF1, SF2 to be primarily used for data communication within the given cell C1 during the time frame TF1 while creating an unload period UNLP1 within the time frame TF1, the positioning 111 giving precedence to time sub-frames SF1, SF2 that are not primarily used in neighboring cells C2, C3.

Therefore, the step of receiving 104 can be performed in each base station BS1, BS2, BS3, such as coordination is established between all radio access nodes BS1, BS2, BS3. These second positioning information indicative of patterns of active sub-frames currently used in the neighboring cells can be received via an interface of the type X2.

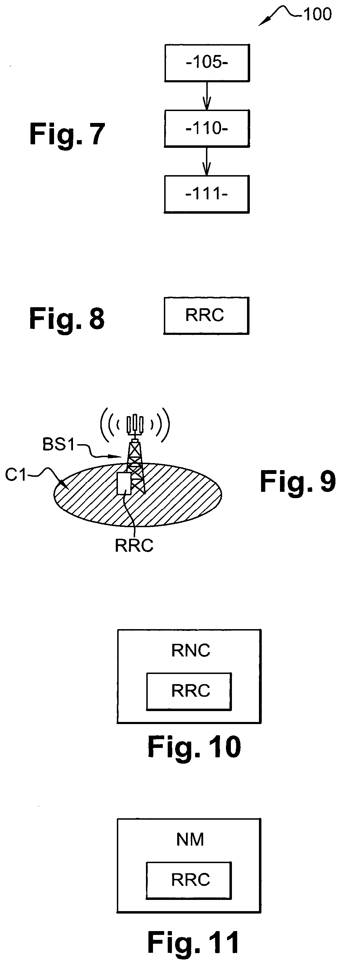

In a second not limited embodiment illustrated in figure 7 of the determining 110 and the positioning 111 according to a distributed manner embodiment, the method 100 comprises, at the given radio access node BS1 a step of measuring 105 the quality of user data radio communication in the given cell C1. It could be noted that in this embodiment the radio access node BS1 is completely autonomous, do not receives any information from neighbour cells. Therefore, the determining 110 and the positioning 111 are performed by the radio access node BS1 by itself. In this embodiment, precedence is given to time sub-frames SF1, SF2 that are not primarily used in neighboring cells C2, C3 by measuring 105 the quality of user data radio communication in the given cell C1, and, if the quality is below a pre-determined threshold, then the position of the reduced number of time sub-frames is modified in order to converge to a position generating a quality of user data radio transmission tending to or above the pre-determined threshold.

To sum up, for all the previous embodiments, when the load of multi-cells is inferior to 100%, and during low load periods, thanks to the invention it is thus possible to de-synchronize the transmission periods of neighbor base stations such that when one base station transmits, the others remain silent the longest time possible. Figure 2 shows a hypothetical case with three cells, respectively loaded at 20%, 50% and 30%. It is clear that, in this way, the method according to the invention decreases the probability of the neighboring cells to transmit at the same moment. It is obvious that this allows decreasing the interference levels perceived by the cells and then enhancing their performances (e.g. throughput).

In a not limited embodiment, the method 100 comprises a further step of adopting 113 a low energy mode during the unload period of frames (for instance, the unload period UNLP1 of the time frame TF1). In a general manner, during an unload period (or silent period), the corresponding radio access node can reduce its power consumption by rapidly turning-off (or move into a low-consumption mode) some of its radio frequency components, like the power amplifier. It could be noted that, during the unload period (or silent period) the control information such as mandatory signaling and control signals can be still transmitted by the radio access node. In this case, the radio components still have to be rapidly activated/deactivated in order to ensure the transmission of such control information.

In the example illustrated in figure 2, when the radio access node BS1 transmits the data on time sub-frames SF1₁ and SF1₂, the radio access nodes BS2 and BS3 can reduce their power consumption by rapidly turning-off some of their radio frequency components. Then, when the radio access node BS2 transmit the data on time sub-frames SF2₃, SF2₄, SF2₅, SF2₆, and SF2₁₀, the radio access nodes BS1 and BS3 can reduce their power consumption by turning-off some of their radio frequency components. Lastly, when the radio access node BS3 transmit the data on time sub-frames SF3₇, SF3₈, and SF3₉, the radio access node BS1 and BS2 can reduce their power consumption by turning-off some of their radio frequency components.

A person of skill in the art would readily recognize that steps of above-described method can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The invention relates also to a radio resource controller RRC for managing radio resources of at least one given cell. The radio resource controller RRC is illustrated in figure 8 and is configured:
- to determine a reduced number of time sub-frames within a given time frame TF1 that is adapted to sustain a given data load of the given cell C1 by selecting radio resource blocks of the given cell frequency-wise first and time-wise next,
- to position the reduced number of time sub-frames within the time frame TF1 to form a pattern P1 of active sub-frames SF1₁ and SF1₂ to be primarily used for data communication within the given cell C1 during the time frame TF1 while creating an unload period UNLP1 within the time frame TF1, the positioning giving precedence to time sub-frames SF1₁ and SF1₂ that are not primarily used in neighboring cells C2, C3.

It could be noted that the radio resource controller RRC according to the invention is construed and arranged to perform the method 100 according to the invention.

The invention relates also to a base station BS1 comprising a radio resource controller RRC according to the invention. This base station BS1 is illustrated in figure 9.

The functions of the base station may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The invention relates also to a radio network controller RNC comprising a radio resource controller RRC according to the invention. This radio network controller RNC is illustrated in figure 10, and is further configured,
- to receive from the given radio access node BS1 cell data load information indicative of a current data load of the given cell C1,
- to determine the given cell data load based on the current cell data load,
- to send to the given radio access node BS1 first positioning information indicative of the pattern of active sub-frames to be used within the given cell C1.

The invention relates also to a network manager NM comprising a radio resource controller RRC according to the invention. The network manager NM is illustrated in figure 11 and is further configured,
- to receive from the given radio access node BS1 cell data load information indicative of a current data load of the given cell C1,
- to determine the given cell data load based on the current cell data load,
- to send to the given radio access node BS1 first positioning information indicative of the pattern of active sub-frames to be used within the given cell C1.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method (100) for managing interference between cells (C1, C2, C3) and power consumptions of radio access nodes (BS1, BS2, BS3) operating the cells (C1, C2, C3), radio communication within the cells (C1, C2, C3) making use of radio resource blocks that are frequency and time multiplexed over the air, the method (100) comprises, for a given cell (C1) operated by a given radio access node (BS1),
- determining (110) a reduced number of time sub-frames within a given time frame (TF1) that is adapted to sustain a given data load of the given cell (C1) by selecting radio resource blocks of the given cell frequency-wise first and time-wise next, the determining (110) of the reduced number of time sub-frames being performed by regrouping all the data transmissions into the minimum number of time sub-frames;
- positioning (111) the reduced number of time sub-frames within the time frame (TF1) to form a pattern (P1) of active sub-frames (SF1₁, SF1₂) to be primarily used for data communication within the given cell (C1) during the time frame (TF1) while creating an unload period (UNLP1) within the time frame (TF1), the positioning (111) giving precedence to time sub-frames (SF1₁, SF1₂) that are not primarily used in neighboring cells (C2, C3) in order to have disjoint transmission periods for neighboring cells.

2. Method (100) according to claim 1, wherein the determining (110) and the positioning (111) are performed in a central manner by a network unit.

3. Method (100) according to claim 2, wherein the method further comprises, at the network unit,
- receiving (101) from the given radio access node (BS1) cell data load information indicative of a current data load of the given cell (C1),
- determining (102) the given cell data load based on the current cell data load,
- sending (112) to the given radio access node (BS1) first positioning information indicative of the pattern of active sub-frames to be used within the given cell (C1).

4. Method (100) according to claim 1, wherein the positioning (111) is performed in a distributed manner by the radio access nodes (BS1, BS2, BS3) operating the cells (C1, C2, C3).

5. Method (100) according to claim 4, and further comprising, at the given radio access node (BS1) receiving (104), from neighboring radio access nodes (BS2, BS3) operating the neighboring cells (C2, C3), second positioning information indicative of patterns (P2, P3) of active sub-frames currently used in the neighboring cells (C2, C3).

6. Method (100) according to claims 1 and 4, wherein the method comprises a step of measuring (105) the quality of user data radio communication in the given cell (C1), precedence being given to time sub-frames (SF1₁, SF1₂) that are not primarily used in neighboring cells (C2, C3), and, if the quality is below a pre-determined threshold, then the position of the reduced number of time sub-frames is modified in order to converge to a position generating a quality of user data radio transmission tending to or above the pre-determined threshold.

7. Method (100) according to one of the preceding claims, further comprising adopting (113) a low energy mode during the unload period (UNLP1) of the time frame (TF1).

8. Method (100) according to one of the preceding claims, wherein during the unload period (UNLP1) no data are sent.

9. Radio resource controller (RRC) for managing interference between cells (C1, C2, C3) and power consumptions of radio access nodes (BS1, BS2, BS3) operating the cells (C1, C2, C3), radio communication within the cells (C1, C2, C3) making use of radio resource blocks that are frequency and time multiplexed over the air, the radio resource controller (RRC) comprises means adapted to, for a given cell (C1) operated by a given radio access node (BS1),
- to determine a reduced number of time sub-frames within a given time frame (TF1) that is adapted to sustain a given data load of the given cell (C1) by selecting radio resource blocks of the given cell frequency-wise first and time-wise next, the determining (110) of the reduced number of time sub-frames being performed by regrouping all the data transmissions into the minimum number of time sub-frames;
- to position the reduced number of time sub-frames within the time frame (TF1) to form a pattern (P1) of active sub-frames (SF1₁, SF1₂) to be primarily used for data communication within the given cell (C1) during the time frame (TF1) while creating an unload period (UNLP1) within the time frame (TF1), the positioning giving precedence to time sub-frames (SF1₁, SF1₂) that are not primarily used in neighboring cells (C2, C3), in order to have disjoint transmission periods for neighboring cells.

10. Radio access node (BS1) **characterized in that** the radio access node (BS1) comprises a radio resource controller (RRC) according to the preceding claim 9.

11. Radio network controller (RNC) **characterized in that** the radio network controller (RNC) comprises a radio resource controller (RRC) according to the claim 9, said radio network controller (RNC) further comprising means, adapted
- to receive from the given radio access node (BS1) cell data load information indicative of a current data load of the given cell (C1),
- to determine the given cell data load based on the current cell data load,
- to send to the given radio access node (BS1) first positioning information indicative of the pattern of active sub-frames to be used within the given cell (C1).

12. Network manager (NM) **characterized in that** the network manager (NM) comprises a radio resource controller (RRC) according to the claim 9, the network manager (NM) further comprising means, adapted
- to receive from the given radio access node (BS1) cell data load information indicative of a current data load of the given cell (C1),
- to determine the given cell data load based on the current cell data load,
- to send to the given radio access node (BS1) first positioning information indicative of the pattern of active sub-frames to be used within the given cell (C1).

## Patentansprüche

1. Verfahren (100) zum Verwalten der Interferenz zwischen Zellen (C1, C2, C3) und von Stromverbräuchen von Funkzugangsknoten (BS1, BS2, BS3), welche die Zellen (C1, C2, C3) betreiben, und der Funkkommunikation innerhalb der Zellen (C1, C2, C3) unter Verwenden von Funkressourcenblöcken mit Frequenz- und Zeit-Multiplexing durch die Luft, wobei das Verfahren (100) umfasst, für eine gegebene Zelle (C1), die betrieben wird von einem gegebenen Funkzugangsknoten (BS1),
- Bestimmen (110) einer reduzierten Anzahl von Zeit-Unterrahmen innerhalb eines gegebenen Zeitrahmens (TF1), der ausgelegt ist zum Erhalten einer gegebenen Datenlast der gegebenen Zelle (C1) durch Auswählen von Funkressourcenblöcken der gegebenen Zelle, erst frequenzweise und dann zeitweise, wobei das Bestimmen (110) der reduzierten Anzahl von Zeitunterrahmen durchgeführt wird durch Neugruppieren aller Datenübertragungen in die minimale Anzahl von Zeitunterrahmen;
- Positionieren (111) der reduzierten Anzahl von Zeitunterrahmen innerhalb des Zeitrahmens (TF1) zum Ausbilden eines Musters (P1) von aktiven Unterrahmen (SF1₁, SF1₂) zum primären Verwenden für die Datenkommunikation innerhalb der gegebenen Zelle (C1) während des Zeitrahmens (TF1), während ein Entladezeitraum (UNLP1) innerhalb der Zeitrahmens (TF1) erzeugt wird, wobei das Positionieren (111) Vorrang für Zeitunterrahmen (SF1i, SF1₂) einräumt, die nicht primär in benachbarten Zellen (C2, C3) verwendet werden, um disjunkte Übertragungszeiträume für benachbarte Zellen zu haben.

2. Verfahren (100) nach Anspruch 1, wobei das Bestimmen (110) und das Positionieren (111) durchgeführt werden in einer zentralen Weise durch eine Netzwerkeinheit.

3. Verfahren (100) nach Anspruch 2, wobei das Verfahren weiterhin umfasst, an der Netzwerkeinheit,
- Empfangen (101) von dem gegebenen Funkzugangsknoten (BS1) von Zelldatenlastinformation, die indikativ ist für eine momentane Datenlast der gegebenen Zelle (C1),
- Bestimmen (102) der gegebenen Zelldatenlast auf Grundlage der momentanen Zelldatenlast,
- Senden (112) an den gegebenen Funkzugangsknoten (BS1) der ersten Positionierungsinformation, die indikativ ist für das Muster aktiver Unterrahmen, die innerhalb der gegebenen Zelle verwendet werden sollen.

4. Verfahren (100) nach Anspruch 1, wobei das Positionieren (111) durchgeführt wird in einer verteilten Weise durch die Funkzugangsknoten (BS1, BS2, BS3), welche die Zellen (C1, C2, C3) betreiben.

5. Verfahren (100) nach Anspruch 4, und weiterhin umfassend, an dem gegebenen Funkzugangsknoten (BS1), Empfangen (104), von benachbarten Funkzugangsknoten (BS2, BS3), welche die benachbarten Zellen (C2, C3) betreiben, von zweiter Positionierungsinformation, die indikativ ist für Muster (P2, P3) aktiver Unterrahmen, die momentan verwendet werden in den benachbarten Zellen (C2, C3).

6. Verfahren (100) nach den Ansprüchen 1 und 4, wobei das Verfahren umfasst einen Schritt des Messens (105) der Qualität der Benutzerdatenfunkkommunikation in der gegebenen Zelle (C1), wobei den Zeitunterrahmen (SF1₁, SF1₂) Vorrang eingeräumt wird, die nicht primär in den benachbarten Zellen (C2, C3) verwendet werden, und, wenn die Qualität unterhalb eines vorbestimmten Schwellenwerts liegt, dann wird die Position der reduzierten Anzahl von Zeitunterrahmen modifiziert wird, um zu einer Position zu konvergieren, die eine Qualität der Benutzerdatenfunkübertragung erzeugt, die sich dem vorbestimmten Schwellenwert annähert oder darüber liegt.

7. Verfahren (100) nach einem der vorhergehenden Ansprüche, weiterhin umfassend das Annehmen (113) eines Niedrigenergiemodus während des Entladezeitraums (UNLP1) des Zeitrahmens (TF1).

8. Verfahren (100) nach einem der vorhergehenden Ansprüche, wobei während des Entladezeitraums (UNLP1) keine Daten gesendet werden.

9. Funkressourcencontroller (RRC) zum Verwalten der Interferenz zwischen den Zellen (C1, C2, C3) und Stromverbräuchen der Funkzugangsknoten (BS1, BS2, BS3), welche die Zellen (C1, C2, C3) betreiben, und der Funkkommunikation innerhalb der Zellen (C1, C2, C3) unter Verwenden von Funkressourcenblöcken mit Frequenz- und Zeit-Multiplexing durch die Luft, wobei der Funkressourcencontroller (RRC) Mittel umfasst, die ausgelegt sind, für eine gegebene Zelle (C1), die betrieben wird von einem gegebenen Funkzugangsknoten (BS1), zum
- Bestimmen einer reduzierten Anzahl von Zeit-Unterrahmen innerhalb eines gegebenen Zeitrahmens (TF1), der ausgelegt ist zum Erhalten einer gegebenen Datenlast der gegebenen Zelle (C1) durch Auswählen von Funkressourcenblöcken der gegebenen Zelle, erst frequenzweise und dann zeitweise, wobei das Bestimmen (110) der reduzierten Anzahl von Zeitunterrahmen durchgeführt wird durch Neugruppieren aller Datenübertragungen in die minimale Anzahl von Zeitunterrahmen;
- Positionieren der reduzierten Anzahl von Zeitunterrahmen innerhalb des Zeitrahmens (TF1) zum Ausbilden eines Musters (P1) aktiver Unterrahmen (SF1₁, SF12) zum primären Verwenden für die Datenkommunikation innerhalb einer gegebenen Zelle (C1) während des Zeitrahmens (TF1), während ein Entladezeitraum (UNLP1) innerhalb des Zeitrahmens (TF1) erzeugt wird, wobei das Positionieren den Zeitunterrahmen (SF1₁, SF1₂) Vorrang einräumt, die nicht primär in benachbarten Zellen (C2, C3) verwendet werden, um disjunkte Übertragungszeiträume für benachbarte Zellen zu haben.

10. Funkzugangsknoten (BS1), **dadurch gekennzeichnet, dass** der Funkzugangsknoten (BS1) einen Funkressourcencontroller (RRC) umfasst nach dem vorhergehenden Anspruch 9.

11. Funknetzwerkcontroller (RNC), **dadurch gekennzeichnet, dass** der Funknetzwerkcontroller (RNC) einen Funkressourcencontroller (RRC) umfasst nach Anspruch 9, wobei besagter Funknetzwerkcontroller (RNC) weiterhin Mittel umfasst, welche ausgelegt sind zum
- Empfangen von dem gegebenen Funkzugangsknoten (BS1) von Zelldatenlastinformation, die indikativ ist für eine momentane Datenlast der gegebenen Zelle (C1),
- Bestimmen der gegebenen Zelldatenlast auf Grundlage der momentanen Zelldatenlast,
- Senden an den gegebenen Funkzugangsknoten (BS1) der ersten Positionierungsinformation, die indikativ ist für das Muster aktiver Unterrahmen, die innerhalb der gegebenen Zelle (C1) benutzt werden sollen.

12. Netzwerkmanager (NM), **dadurch gekennzeichnet, dass** der Netzwerkmanager (NM) einen Funkressourcencontroller (RRC) umfasst nach Anspruch 9, wobei der Netzwerkmanager (NM) weiterhin Mittel umfasst, die ausgelegt sind zum
- Empfangen von dem gegebenen Funkzugangsknoten (BS1) von Zelldatenlastinformation, die indikativ ist für eine momentane Datenlast der gegebenen Zelle (C1),
- Bestimmen der gegebenen Zelldatenlast auf Grundlage der momentanen Zelldatenlast,
- Senden an den gegebenen Funkzugangsknoten (BS1) der ersten Positionierungsinformation, die indikativ ist für das Muster aktiver Unterrahmen, die innerhalb der gegebenen Zelle (C1) benutzt werden sollen.

## Revendications

1. Procédé (100) pour gérer le brouillage entre des cellules (C1, C2, C3) et les consommations d'énergie de noeuds d'accès radio (BS1, BS2, BS3) exploitant les cellules (C1, C2, C3), une radiocommunication dans les cellules (C1, C2, C3) utilisant des blocs de ressources radio qui sont multiplexés en fréquence et dans le temps par liaison radio, le procédé (100) consistant, pour une cellule donnée (C1) exploitée par un noeud d'accès radio donné (BS1),
- à déterminer (110) un nombre réduit de sous-trames temporelles dans une trame temporelle donnée (TF1) qui est conçue pour soutenir une charge de données donnée de la cellule donnée (C1) en sélectionnant des blocs de ressources radio de la cellule donnée d'abord dans le domaine fréquentiel puis dans le domaine temporel, la détermination (110) du nombre réduit de sous-trames temporelles étant réalisée en regroupant toutes les émissions de données dans le nombre minimum de sous-trames temporelles ;
- à positionner (111) le nombre réduit de sous-trames temporelles dans la trame temporelle (TF1) pour former un motif (P1) de sous-trames actives (SF1₁, SF1₂) destinées à être utilisées principalement pour une communication de données dans la cellule donnée (C1) durant la trame temporelle (TF1) tout en créant une période de décharge (UNLP1) dans la trame temporelle (TF1), le positionnement (111) donnant priorité à des sous-trames temporelles (SF1₁, SF1₂) qui ne sont pas utilisées principalement dans des cellules voisines (C2, C3) afin d'avoir des périodes d'émission disjointes pour des cellules voisines.

2. Procédé (100) selon la revendication 1, dans lequel la détermination (110) et le positionnement (111) sont exécutés de manière centrale par une unité de réseau.

3. Procédé (100) selon la revendication 2, le procédé comprenant en outre, au niveau de l'unité de réseau, les étapes suivantes,
- recevoir (101) à partir du noeud d'accès radio donné (BS1) des informations de charge de données de cellule indiquant une charge de données actuelle de la cellule donnée (C1),
- déterminer (102) la charge de données de cellule donnée sur la base de la charge de données de cellule actuelle,
- envoyer (112) au noeud d'accès radio donné (BS1) des premières informations de positionnement indiquant le motif de sous-trames actives destinées à être utilisées dans la cellule donnée (C1).

4. Procédé (100) selon la revendication 1, dans lequel le positionnement (111) est exécuté de manière répartie par les noeuds d'accès radio (BS1, BS2, BS3) exploitant les cellules (C1, C2, C3).

5. Procédé (100) selon la revendication 4, et comprenant en outre, au niveau du noeud d'accès radio donné (BS1), la réception (104), à partir de noeuds d'accès radio voisins (BS2, BS3) exploitant les cellules voisines (C2, C3), de secondes informations de positionnement indiquant des motifs (P2, P3) de sous-trames actives actuellement utilisées dans les cellules voisines (C2, C3).

6. Procédé (100) selon les revendications 1 et 4, le procédé comprenant une étape de mesure (105) de la qualité d'une radiocommunication de données d'utilisateur dans la cellule donnée (C1), la priorité étant donnée aux sous-trames temporelles (SF1₁, SF1₂) qui ne sont pas principalement utilisées dans des cellules voisines (C2, C3), et, si la qualité est inférieure à un seuil prédéterminé, alors la position du nombre réduit de sous-trames temporelles est modifiée afin de converger vers une position générant une qualité d'émission radio de données d'utilisateur qui tend vers le seuil prédéterminé ou qui est supérieure à celui-ci.

7. Procédé (100) selon l'une des revendications précédentes, comprenant en outre l'adoption (113) d'un mode de faible énergie durant la période de décharge (UNLP1) de la trame temporelle (TF1).

8. Procédé (100) selon l'une des revendications précédentes, dans lequel, durant la période de décharge (UNLP1), aucune donnée n'est envoyée.

9. Contrôleur de ressources radio (RRC) pour gérer le brouillage entre des cellules (C1, C2, C3) et les consommations d'énergie de noeuds d'accès radio (BS1, BS2, BS3) exploitant les cellules (C1, C2, C3), une radiocommunication dans les cellules (C1, C2, C3) utilisant des blocs de ressources radio qui sont multiplexés en fréquence et dans le temps par liaison radio,
le contrôleur de ressources radio (RRC) comprenant des moyens adaptés, pour une cellule donnée (C1) exploitée par un noeud d'accès radio donné (BS1),
- pour déterminer un nombre réduit de sous-trames temporelles dans une trame temporelle donnée (TF1) qui est conçue pour soutenir une charge de données donnée de la cellule donnée (C1) en sélectionnant des blocs de ressources radio de la cellule donnée d'abord dans le domaine fréquentiel puis dans le domaine temporel, la détermination (110) du nombre réduit de sous-trames temporelles étant réalisée en regroupant toutes les émissions de données dans le nombre minimum de sous-trames temporelles ;
- pour positionner le nombre réduit de sous-trames temporelles dans la trame temporelle (TF1) pour former un motif (P1) de sous-trames actives (SF1₁, SF1₂) destinées à être utilisées principalement pour une communication de données dans la cellule donnée (C1) durant la trame temporelle (TF1) tout en créant une période de décharge (UNLP1) dans la trame temporelle (TF1), le positionnement donnant priorité à des sous-trames temporelles (SF1₁, SF1₂) qui ne sont pas utilisées principalement dans des cellules voisines (C2, C3), afin d'avoir des périodes d'émission disjointes pour des cellules voisines.

10. Noeud d'accès radio (BS1) **caractérisé en ce que** le noeud d'accès radio (BS1) comprend un contrôleur de ressources radio (RRC) selon la revendication 9 précédente.

11. Contrôleur de réseau radio (RNC) **caractérisé en ce que** le contrôleur de réseau radio (RNC) comprend un contrôleur de ressources radio (RRC) selon la revendication 9, ledit contrôleur de réseau radio (RNC) comprenant en outre des moyens, adaptés
- pour recevoir à partir du noeud d'accès radio donné (BS1) des informations de charge de données de cellule indiquant une charge de données actuelle de la cellule donnée (C1),
- pour déterminer la charge de données de cellule donnée sur la base de la charge de données de cellule actuelle,
- pour envoyer au noeud d'accès radio donné (BS1) des premières informations de positionnement indiquant le motif de sous-trames actives destinées à être utilisées dans la cellule donnée (C1).

12. Gestionnaire de réseau (NM) **caractérisé en ce que** le gestionnaire de réseau (NM) comprend un contrôleur de ressources radio (RRC) selon la revendication 9, le gestionnaire de réseau (NM) comprenant en outre des moyens, adaptés
- pour recevoir à partir du noeud d'accès radio donné (BS1) des informations de charge de données de cellule indiquant une charge de données actuelle de la cellule donnée (C1),
- pour déterminer la charge de données de cellule donnée sur la base de la charge de données de cellule actuelle,
- pour envoyer au noeud d'accès radio donné (BS1) des premières informations de positionnement indiquant le motif de sous-trames actives destinées à être utilisées dans la cellule donnée (C1).
